# EUROPEAN PATENT SPECIFICATION

(11) **EP 3 923 559 B1**
(45) Date of publication and mention of the grant of the patent: **16.04.2025**
(21) Application number: 20213309.6
(22) Date of filing: 11.12.2020
(51) Int. Cl.: H04N 1/203, H04N 1/32, H04N 1/387, H04N 1/40, G06T 7/12

(54) **IMAGE READING DEVICE AND METHOD FOR USING ACS FUNCTION TO SEPARATLY ENCODE MONOCHROME AND COLOR IMAGES OBTAINED FROM A MULTI-CROP SCANNING FUNCTION**
BILDLESEVORRICHTUNG, BILDERZEUGUNGSVORRICHTUNG UND BILDLESEVERFAHREN ZUR VERWENDUNG DER ACS-FUNKTION, UM MONOCHROM- UND FARBBILDERN SEPARATE KODIEREN, DIE AUS EINER MULTI-CROP-SCANNFUNKTION VON EINER MULTI-CROP-ABTASTFUNKTION ERHALTEN WERDEN
DISPOSITIF DE LECTURE D'IMAGE ET PROCÉDÉ D'UTILISATION DE LA FONCTION ACS POUR CODER SÉPARÉMENT DES IMAGES MONOCHROMES ET EN COULEUR OBTENUES À PARTIR D'UNE FONCTION DE NUMÉRISATION MULTI-RECADRAGE

(30) Priority: 08.06.2020 JP 2020099597
(43) Date of publication of application: 15.12.2021
(73) Proprietor: Toshiba TEC Kabushiki Kaisha, Tokyo 141-8562 (JP)
(72) Inventor: Tanaka, Hiromasa, Shinagawa-ku, Tokyo 141-8562 (JP)
(74) Representative: Bandpay & Greuter

(56) References cited:
- EP-A1- 3 438 931
- US-A1- 2009 161 970
- US-B2- 8 964 239

## Description

### FIELD

Embodiments described herein relate to an image reading apparatus, an image forming apparatus, and an image reading method.

### BACKGROUND

In the related art, an image forming apparatus, such as a multifunction peripheral (MFP,) includes an image reading apparatus that scans documents. Some image reading apparatuses have a multi-crop scanning function. With a multi-crop scanning function multiple smaller-sized documents arranged on a document table of the image reading apparatus can automatically be read as independent images. The smaller-sized documents are, for example, L-sized photographs (equivalent to 3R size in U.S. designation), business cards, or magazine clippings. The multi-crop scanning function detects the different documents arranged on the document table, separately corrects a placement angle (document tilt) for each detected document, and then isolates the individual images from each other for saving as separate files if desired.

Furthermore, in the related art, some image reading apparatuses also have an automatic color selection (ACS) function. The ACS function is a function for automatically determining whether the document that has been read is a color document or a monochrome document. This process may be referred to as performing a "color determination." In general, the ACS function measures the image feature values related to color for the pixels that forms the image as read from the document. A feature value related to color (hereinafter, referred to as "color information") is, for example, a value such as saturation. The ACS function makes a color determination based on the measurement results of color information from the image.

There are cases where color documents and monochrome documents are mixed on the document table. In such a case, with the multi-crop scanning function of the related art, when the ACS function is used, it will be uniformly determined that all of the scanned documents are color documents or all of the scanned documents are monochrome documents. Accordingly, a color document may be incorrectly encoded as a monochrome image, or a monochrome document may be incorrectly encoded as a color image. In this manner, the multi-crop scanning function of the related art has a problem in that there are cases where it is not possible to most appropriately encode each image read from the plurality of documents placed on the document table.

US 8964239 describes a system for handling multiple documents while scanning. US 2009/161970 describes an image processing device capable of performing encoding processing according to a compression method respectively for compressing multilevel image data and compressing binary image data. EP 3438931 describes an image processing apparatus capable of executing a multi-cropping process for cutting out an image of each original document from the scanned images.

### BRIEF DESCRIPTION OF THE DRAWINGS

FIG. 1 is an external view of an image forming apparatus of an embodiment.
FIG. 2 is a schematic view illustrating a part of an image reading unit.
FIG. 3 is a block diagram illustrating aspects of an image forming apparatus of an embodiment.
FIG. 4 is a schematic view illustrating a configuration of a control unit.
FIG. 5 depicts a state of documents on a document table glass.
FIG. 6 is a view illustrating overall image data generated by the image forming apparatus.
FIG. 7 depicts image data corrected by an image forming apparatus according to an embodiment.
FIG. 8 depicts image regions isolated by an image forming apparatus according to an embodiment.
FIGS. 9A and 9B depict a setting screen displayed on a touch panel.
FIG. 10 depicts a setting screen displayed on a touch panel.
FIG. 11 depicts a setting screen displayed on a touch panel.
FIG. 12 depicts a setting screen displayed on a touch panel.
FIG. 13 is a flowchart of an operation of a control unit.

### DETAILED DESCRIPTION

The invention is set out in the appended set of claims.

An image reading apparatus of an embodiment includes a reading unit and a controller. The reading unit is configured to read a plurality of documents on a document table and generates an overall scan image as color image data including images of all the documents in the plurality of documents. The controller is configured to isolate an image of each document from the overall scan image, perform a color determination on each of the isolated images to determine if the document corresponding to the isolated image is a color document or a non-color document, and encode each of the isolated images with an image encoding method selected based on the color determination for the isolated image.

Preferably, the controller is further configured to store each encoded image in a storage unit.

The controller is further configured to detect edges of image regions for each of the documents in the overall scan image, and correct a tilt of each of the image regions.

If the document corresponding to the isolated image is determined to be a non-color document, the controller is configured to encode the isolated image with one of a binary image encoding or a multi-value image encoding.

The controller is further configured to select the one of the binary image encoding or the multi-value encoding based on pixel values of the isolated image.

The controller is further configured to convert the isolated image to gray-scale image data when the document corresponding to the isolated image is determined to be a non-color document.

There is also provided an image forming apparatus, comprising the image reading apparatus as described above and a printer unit configured to form images on a recording medium.

Preferably, the printer unit is configured to form images on the recording medium based on encoded images.

Preferably, the controller is further configured to send each encoded image to the printer unit.

There is also provided an image reading method, comprising: reading a plurality of documents on a document table and generating an overall scan image as color image data including images of all the documents in the plurality of documents; isolating an image of each document from the overall scan image; performing a color determination on each of the isolated images to determine if the document corresponding to the isolated image is a color document or a non-color document; and encoding each of the isolated images with an image encoding method selected based on the color determination for the isolated image.

Preferably, the image reading method further comprises storing each encoded image in a storage unit.

The image reading method further comprises detecting edges of image regions for each of the documents in the overall scan image, and correcting a tilt of each of the image regions.

The image reading method further comprises encoding the isolated image with one of a binary image encoding or a multi-value image encoding, if the document corresponding to the isolated image is determined to be a non-color document.

The image reading method further comprises selecting the one of the binary image encoding or the multi-value encoding based on pixel values of the isolated image.

The image reading method further comprises converting the isolated image to gray-scale image data when the document corresponding to the isolated image is determined to be a non-color document.

In an image reading apparatus, an image forming apparatus, an image reading method, and an image reading method of an embodiment, it becomes possible to appropriately encode each of images read using a "multi-crop scanning function," which is a function of automatically reading a plurality of smaller-sized documents on a document table to be images independent from each other.

An image forming apparatus 100 according to the present embodiment has a multi-crop scanning function. The image forming apparatus 100 reads the entire scannable region of the document table as a color image in a single pass and generates image data corresponding to the entire scannable region. The generated image data for the entire scannable region is referred to as "entire image data."

The image forming apparatus 100 then cuts out (isolates) an image region for each of the separately placed smaller-sized documents from the generated entire image data. Accordingly, image data for each separate document (which is also referred to as "individual image data" or "individual document image data") can be generated.

The image forming apparatus 100 also determines whether or not each read document is a color document based on the corresponding the individual document image data. If it is determined that the read document is not a color document, the image forming apparatus 100 next determines whether the document is a monochrome binary document or a grayscale document. The image forming apparatus 100 performs appropriate processing, such as encoding and file creation, depending on the determination result, and then stores the individual image data that has been subjected to the processing.

The image forming apparatus 100 can print or form an image according to the encoded individual image data.

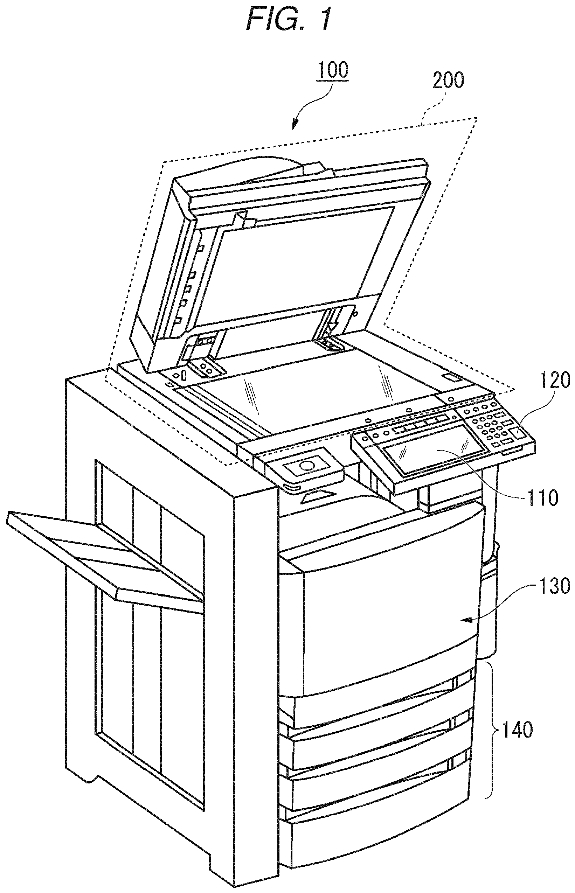

First, the overall configuration of the image forming apparatus 100 according to an embodiment will be described with reference to FIG. 1.

FIG. 1 is an external view illustrating the overall configuration example of the image forming apparatus 100. The image forming apparatus 100 is, for example, a multifunction peripheral (MFP). The image forming apparatus 100 includes a display 110, a control panel 120, a printer unit 130, a sheet accommodation unit 140, and an image reading unit 200. The image forming apparatus 100 is one example of an image reading apparatus, and, in other examples, may be a copying machine, a scanner, or the like.

The display 110 is an image display device, such as a liquid crystal display (LCD) or an organic electro luminescence display (OLED). The display 110 displays various pieces of information related to the image forming apparatus 100. The display 110 and the control panel 120 may be configured as an integrated touch panel (also referred to as an input and output unit).

The control panel 120 has a plurality of buttons. The control panel 120 receives an input operation of the user. The control panel 120 outputs an operation signal that corresponds to the user's input operation to a control unit 101 of the image forming apparatus 100.

The printer unit 130 forms an image on a sheet based on the image data generated by the image reading unit 200. The printer unit 130 may be of a type that fixes a visible image such as a toner image on a sheet or may be an ink jet type device. The sheet is, for example, paper or label paper. In general, the sheet may be any material type as long as the image forming apparatus 100 can form an image on the surface thereof. The sheet may be accommodated in the sheet accommodation unit 140 or may be a sheet manually fed to the image forming apparatus 100.

The sheet accommodation unit 140 accommodates a sheet used for image formation in the printer unit 130.

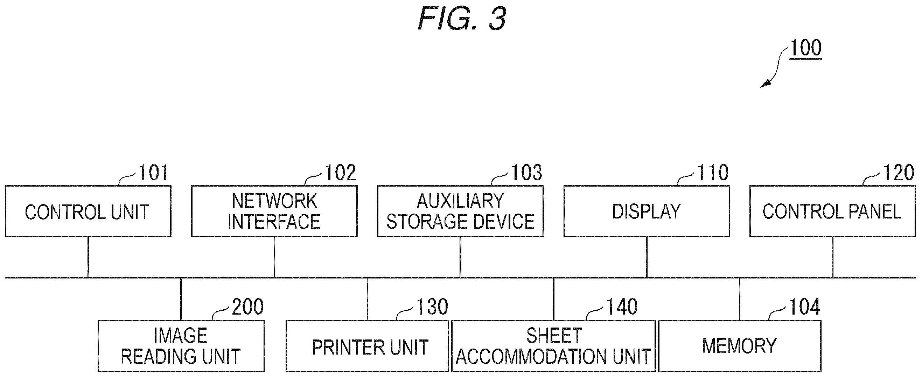

The image reading unit 200 reads an image formed on a document (referred to as a "sheet S" below) placed on the document table based on the brightness and darkness of reflected light, and generates image data (entire image data) which is digital data. The image reading unit 200 records the generated image data in an auxiliary storage device 103 (see FIG. 3). The image reading unit 200 may output the generated image data to the control unit 101 or the printer unit 130. The image reading unit 200 may also output the generated image data to another information processing apparatus or the like via a network.

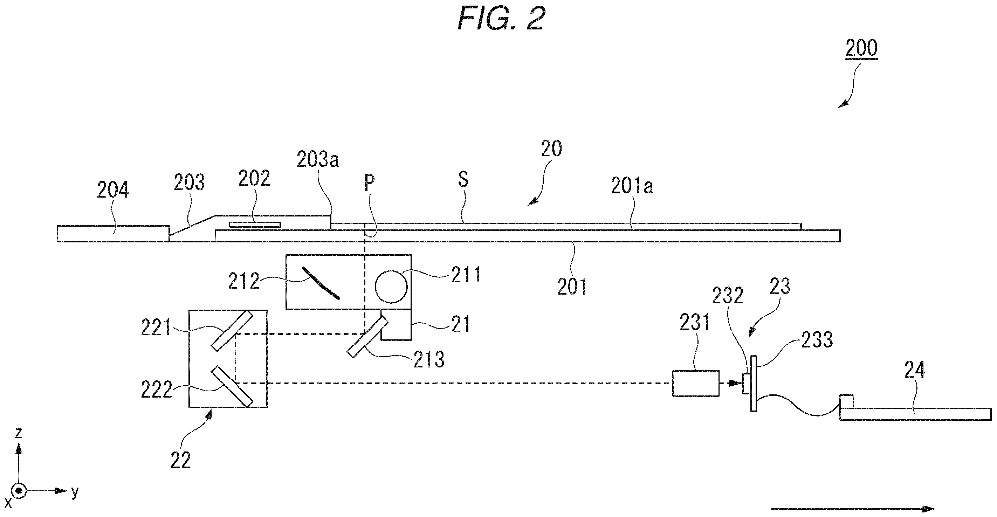

Next, a configuration of the image reading unit 200 of the image forming apparatus 100 according to the embodiment will be described with reference to FIG. 2. FIG. 2 is a schematic view illustrating a part of a configuration example of the image reading unit 200.

The image reading unit 200 includes a document table 20 (also referred to as a platen or document platen), a first carriage 21, a second carriage 22, an imaging unit 23, and an image reading control unit 24. The direction in which the first carriage 21 moves is the sub-scanning direction y. On the document table 20, the direction orthogonal to the sub-scanning direction y is the main scanning direction x. The direction orthogonal to both the main scanning direction x and the sub-scanning direction y is a height direction z.

The document table 20 includes a document table glass 201, a shading plate 202, a document scale 203, and a through-read glass 204.

The document table glass 201 has a placement surface 201a on which the sheet S is placed. The shading plate 202 is composed of a white member. The shading plate 202 has white color that serves as a reference when shading correction is performed on an image read from the sheet S. The shading plate 202 is long shaped in the main scanning direction x.

When the multi-crop scanning function is not used and only one sheet S is being read, the document scale 203 indicates the appropriate or expected position of the sheet S on the document table glass 201. A distal end reference portion 203a is provided at the end portion of the document scale 203. The distal end reference portion 203a forms a projection portion for pressing against the end portion of the sheet S by forming a step between the distal end reference portion 203a and the placement surface 201a of the document table glass 201. The position of the sheet S is set by being pressed against the distal end reference portion 203a on the document table glass 201. The position for placing the corner of the distal end of the sheet S is predetermined on the placement surface 201a. By placing the corner of the distal end of the sheet S at the predetermined position, positioning in the main scanning direction x and the sub-scanning direction y is performed.

The first carriage 21 includes a light source 211, a reflector 212, and a first mirror 213. The light source 211 emits light. The reflector 212 reflects the light emitted from the light source 211. The light reflected by the reflector 212 is uniformly applied to the shading plate 202 and the sheet S. The light distribution characteristics in the main scanning direction x at the reading position of the sheet S is adjusted based on the reflected light. The first mirror 213 reflects the light that has been reflected by the shading plate 202 and the sheet S toward a second mirror 221 of the second carriage 22.

The second carriage 22 includes the second mirror 221 and a third mirror 222. The second mirror 221 reflects the light reflected by the first mirror 213 to the third mirror 222. The third mirror 222 reflects the light reflected by the second mirror 221 to a condenser lens 231 of the imaging unit 23.

The imaging unit 23 includes the condenser lens 231, a CCD sensor 232, and a CCD substrate 233. The condenser lens 231 focuses the light reflected by the third mirror 222. The condenser lens 231 focuses the condensed light on an image formation surface (reading surface) of the CCD sensor 232. The CCD sensor 232 is installed on the CCD substrate 233. For example, the CCD sensor 232 is a hybrid 4-line (4-channel) sensor. The hybrid 4-line sensor includes a 3-line sensor for reading a color image and a 1-line sensor for reading a monochrome image. The 3-line sensor reads R (red), G (green) and B (blue) light. The CCD sensor 232 converts the light focused by the condenser lens 231 into electric charges. By this conversion, the CCD sensor 232 converts the image formed by the condenser lens 231 into an electric signal. The CCD substrate 233 generates image data based on the electric signal generated by the photoelectric conversion of the CCD sensor 232. When generating the image data, the CCD substrate 233 generates the image data by using the correction information obtained in advance by the shading correction processing. The CCD substrate 233 outputs the generated image data to the image reading control unit 24. The processing performed by the CCD substrate 233 is executed by an analog front end (AFE) installed on the CCD substrate 233.

The image reading control unit 24 controls the first carriage 21, the second carriage 22, and the imaging unit 23. For example, the image reading control unit 24 controls the movement of the first carriage 21, and the turning on and off of the light source 211 of the first carriage 21. For example, the image reading control unit 24 controls the operation of the imaging unit 23.

The first carriage 21 moves in the sub-scanning direction y according to the control of the image reading control unit 24. The second carriage 22 moves in the same direction as the first carriage 21 at a speed of 1/2 the movement speed of the first carriage 21. By such an operation, even when the first carriage 21 moves, the optical path length of the light reaching the image formation surface of the CCD sensor 232 does not change. **In** other words, the optical path length of the light in the optical system formed by the first mirror 213, the second mirror 221, the third mirror 222, and the condenser lens 231 is constant. In other words, the optical path length from the placement surface 201a to the image formation surface of the CCD sensor 232 is constant.

In the example of FIG. 2, the first carriage 21 moves from left to right along the sub-scanning direction y. As the first carriage 21 moves in the sub-scanning direction y, a reading position P for the sheet S also moves. Therefore, the reading position P moves from left to right along the sub-scanning direction y. The reading position P is a position for one line in the main scanning direction x. As the reading position P moves in the sub-scanning direction y, the images of the reading position P of the sheet S are sequentially formed on the image formation surface of the CCD sensor 232. The CCD sensor 232 outputs a signal corresponding to the formed image of the reading position P as a signal for one line in the main scanning direction x. The CCD substrate 233 generates image data over the entire region of the document table glass 201 based on signals of a plurality of lines.

Next, the functional configuration of the image forming apparatus 100 according to the embodiment will be described with reference to FIG. 3. FIG. 3 is a block diagram illustrating a hardware configuration of the image forming apparatus 100.

The image forming apparatus 100 includes the control unit 101, a network interface 102, the auxiliary storage device 103, a memory 104, the display 110, the control panel 120, the printer unit 130, the sheet accommodation unit 140, and the image reading unit 200. Each functional unit included in the image forming apparatus 100 is connected to each other via an internal bus and can input and output data to and from each other. Each functional unit already described with reference to FIG. 1 is given the same reference numerals as used with the description of FIG. 1, and additional description thereof will be omitted.

The control unit 101 controls the operations of each functional unit of the image forming apparatus 100. The control unit 101 causes each functional unit to execute various processing by executing a program. The program is stored in advance in the memory 104, for example.

The network interface 102 transmits and receives data to and from an external device. The network interface 102 operates as an input interface and receives data transmitted from an external device. The network interface 102 operates as an output interface and transmits data to an external device.

The auxiliary storage device 103 is a storage medium such as a hard disk drive (HDD) or a solid-state drive (SSD). The auxiliary storage device 103 stores various pieces of data. The various pieces of data are, for example, image data and the like. The image data is digital data generated by the image reading unit 200, for example.

The memory 104 is a storage medium, such as a random access memory (RAM). The memory 104 temporarily stores data and programs used by each functional unit included in the image forming apparatus 100. The digital image data generated by the image reading unit 200 may be recorded in the memory 104 instead of the auxiliary storage device 103.

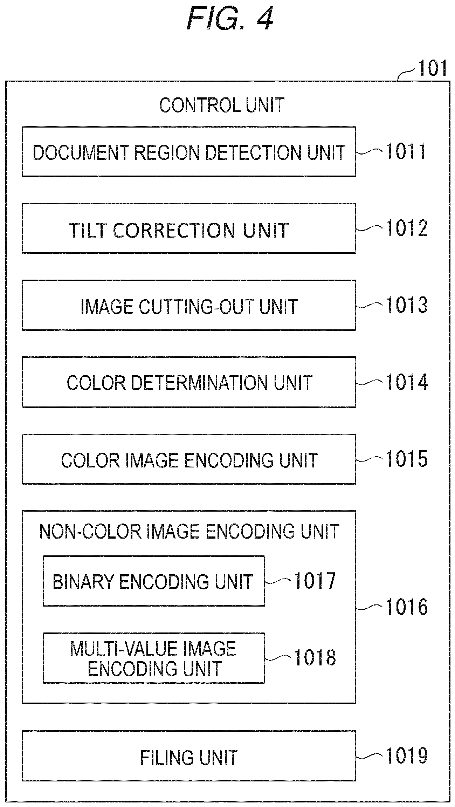

Next, the configuration of the control unit 101 of the image forming apparatus 100 according to the embodiment will be described with reference to FIGS. 4 to 12. FIG. 4 is a schematic view illustrating a configuration example of the control unit 101.

The control unit 101 includes a document region detection unit 1011, a tilt correction unit 1012, an image cutting-out unit 1013, a color determination unit 1014, a color image encoding unit 1015, a non-color image encoding unit 1016, and a filing unit 1019.

The document region detection unit 1011 acquires the entire image data as a color image generated by the image reading unit 200 from, for example, the auxiliary storage device 103. In other examples, the document region detection unit 1011 may acquire the entire image data when the entire image data is stored in the auxiliary storage device 103 or when the operation signal indicating the instruction information input by the user from the control panel 120 is acquired.

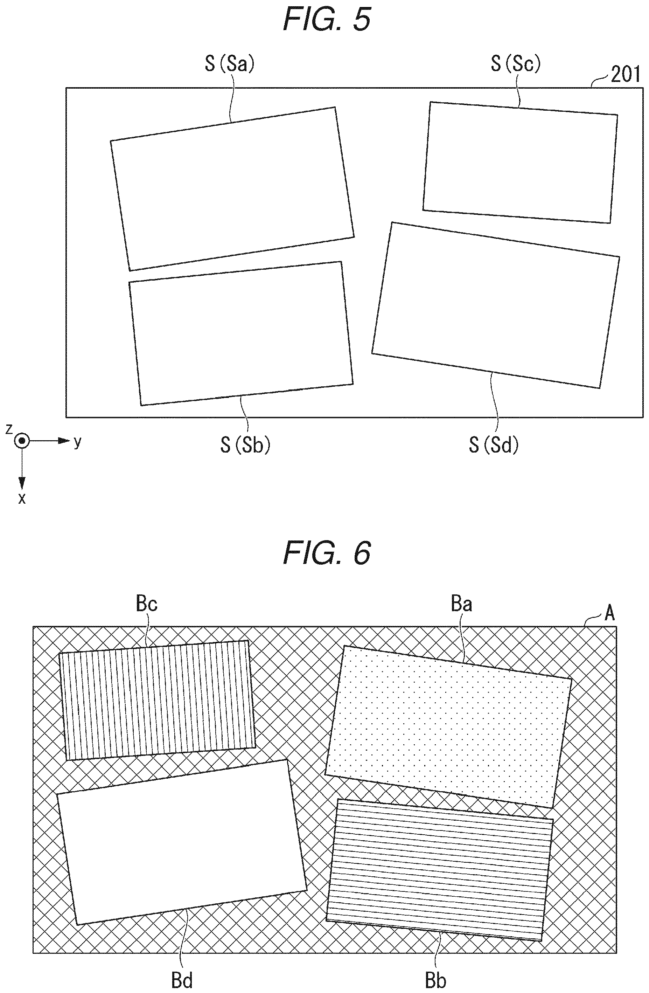

An example of entire image data will be described with reference to FIGS. 5 and 6. FIG. 5 is a view illustrating a plurality of sheets S placed on the document table glass 201 when the multi-crop scanning function is used. FIG. 5 is a view when the document table glass 201 is viewed from directly above. In the example illustrated in FIG. 5, four rectangular sheets S (sheets Sa, Sb, Sc, and Sd) are placed on the document table glass 201. For example, the sheet Sa is a sheet on which an image illustrating a color photograph is formed. For example, the sheet Sb is a sheet on which an image illustrating a monochrome binary line drawing is formed. For example, the sheet Sc is a sheet on which an image illustrating a monochrome binary character string (text) is formed. For example, the sheet Sd is a sheet on which a grayscale image is formed.

As illustrated in FIG. 5, the orientations of the edges of the four sheets S do not match either of the main scanning direction x or the sub-scanning direction y. In other words, the four sheets S are at various angles with respect to the scanning directions. For example, the long side of the sheet Sa and the long side of the sheet Sb are inclined slightly to the left with respect to the sub-scanning direction y. Further, for example, the long side of the sheet Sc and the long side of the sheet Sd are inclined slightly to the right with respect to the sub-scanning direction y. A sheet S placed on the document table glass 201 is generally arranged manually by the user, and thus the document tilt or misalignment often occurs.

FIG. 6 is a view schematically illustrating an example of the entire image data A as generated by reading the entire imaging region of the document table glass 201 illustrated in FIG. 5. When the multi-crop scanning function is used, the entire region on the document table glass 201 is read by the 3-line sensor, and the entire image data A is generated as RGB data (also referred to as color image data).

When the multi-crop scanning function is to be used, it is desirable to read the entire region on the document table glass 201 with the cover of the document table 20 open. This is because, when reading is performed in a state where the cover of the document table 20 is open, the region where a sheet S is not placed becomes darker in the generated entire image data A. Accordingly, the difference in brightness between the region where a sheet S is present and the region where a sheet S is not present becomes large. Therefore, the outline (edge) of the individual image data is more easily detected, and the individual image data is easily isolated.

As illustrated in FIG. 6, the entire image data A includes four image regions Ba, Bb, Bc, and Bd (sub-image regions) corresponding to the four sheets Sa, Sb, Sc, and Sd illustrated in FIG. 5, respectively. Further, in the entire image data A, the region other than those occupied by the four image regions Ba, Bb, Bc, and Bd is relatively darker in color than the four image regions Ba, Bb, Bc, and Bd.

The document region detection unit 1011 detects edges of the image regions corresponding to each sheet S placed on the document table glass 201 in the acquired entire image data A. The document region detection unit 1011 detects an edge based on the difference in brightness of pixels that form the entire image data A. For example, the document region detection unit 1011 detects every edge of the four image regions Ba, Bb, Bc, and Bd. The document region detection unit 1011 outputs "edge information" indicating the detected edges to the tilt correction unit 1012.

The tilt correction unit 1012 acquires the edge information output from the document region detection unit 1011. The tilt correction unit 1012 identifies the tilt of each image region based on the direction of the edge(s) indicated in the acquired edge information. For example, the tilt correction unit 1012 identifies the tilt of each of the four image regions Ba, Bb, Bc, and Bd individually. The tilt correction unit 1012 corrects the tilt of the four image regions Ba, Bb, Bc, and Bd. For example, the tilt correction unit 1012 rotates each image region such that either the long side direction or the short side direction of each image region matches to one of the main scanning direction x or the sub-scanning direction y. Accordingly, the tilt of each image region is corrected. For example, the tilt correction unit 1012 selects the one of the main scanning direction x and the sub-scanning direction y requires a smaller rotation angle of the image region to match and rotates each image region accordingly.

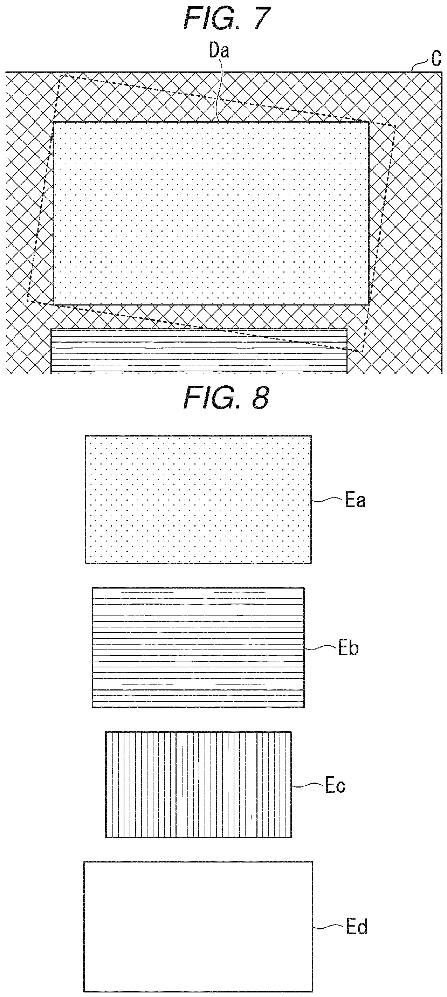

An example of the correction of the tilt of the image regions will be described with reference to FIGS. 6 and 7. FIG. 7 depicts image data C for which a tilted image region Ba included in the entire image data A of FIG. 6 has been corrected by the tilt correction unit 1012. FIG. 7 illustrates image region Da corresponding to the tilted image region Ba corrected by making the long side direction match the main scanning direction x or the sub-scanning direction y. The image region Da has been subjected to the correction of the tilt such that the long side of the image region Ba now matches the sub-scanning direction y. In addition, the remaining three image regions (image regions Bb, Bc, and Bd) included in the entire image data A are also corrected in tilt in a manner similar to the above.

The tilt correction unit 1012 outputs image data C for which the tilt of each image region has been corrected to the image cutting-out unit 1013.

The image cutting-out unit 1013 acquires the image data output from the tilt correction unit 1012. The image cutting-out unit 1013 isolates ("cuts-out") the image region included in the image data and generates individual image data corresponding to the isolated image region. The image cutting-out unit 1013 outputs the generated individual image data to the color determination unit 1014.

FIG. 8 depicts the isolated image regions from the image cutting-out unit 1013. As illustrated in FIG. 8, the image cutting-out unit 1013 separates each image region from each other image region and generates the individual image data Ea, Eb, Ec, and Ed respectively corresponding to the image regions Ba, Bb, Bc, and Bd that were illustrated in FIG. 6.

The color determination unit 1014 acquires the individual image data output from the image cutting-out unit 1013. The color determination unit 1014 makes a "color determination" to determine whether or not each read document is a color document. The color determination unit 1014 makes the color determination based on feature values related to the color of the pixels that forms the individual image data. Various methods can be used for the color determination.

For example, the color determination unit 1014 converts the individual image data, which is received as RGB data, into saturation data. The color determination unit 1014 RGB data may be subjected to filter processing in order to enhance conversion accuracy from the RGB data to the saturation data. The color determination unit 1014 compares the saturation of pixels that form the individual image data with a predetermined saturation threshold value (hereinafter, referred to as "saturation threshold value") for each pixel.

The color determination unit 1014 counts the number of pixels for which the saturation is greater than the saturation threshold value among the pixels included in the individual image data. The color determination unit 1014 compares the number of pixels for which the saturation is greater than the saturation threshold value to a predetermined threshold number of pixels (hereinafter, referred to as "auto color select (ACS) threshold value"). The color determination unit 1014 determines that the individual image data is color image data when the number of pixels for which the saturation is greater than the saturation threshold value is greater than the ACS threshold value. The color determination unit 1014 may determine that the individual image data is not a color document when the number of pixels for which the saturation is greater than the saturation threshold value is equal to or less than the ACS threshold value. In other words, the color determination unit 1014 may determine that the individual image data is a monochrome binary document or a grayscale document rather than a color document.

In this manner, the ACS threshold value is a parameter that determines how readily individual image data will be deemed a color document by the color determination of the color determination unit 1014. The ACS threshold value may be varied. For example, the ACS threshold value may be changeable based on instructions input by the user from the control panel 120.

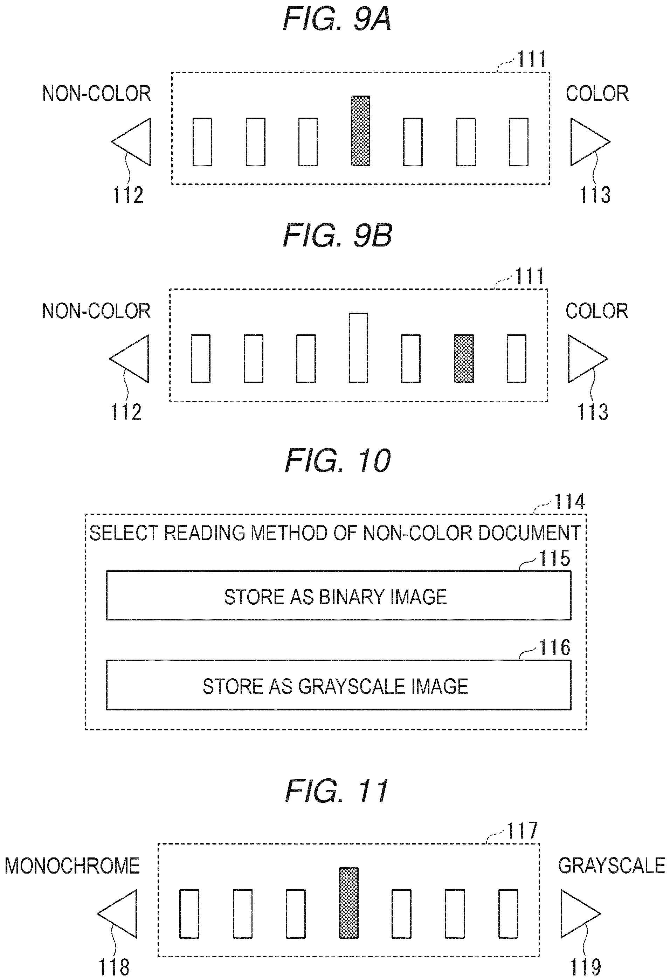

FIGs. 9A and 9B illustrate an example of a setting screen to be displayed on a touch panel (that is, display 110 integrated with the control panel 120). FIGS. 9A and 9B each illustrate a setting screen for the user to adjust of the level of the ACS threshold value used in determining whether individual image data corresponds to a color document. Hereinafter, adjustment of the level for determining whether a document is a color document will be referred to as "ACS adjustment". The setting screen for the user to perform the ACS adjustment illustrated in FIGS. 9A and 9B can be referred to as an "ACS setting screen".

As illustrated in FIGS. 9A and 9B, the ACS setting screen includes a setting state display region 111, a setting button image 112, and a setting button image 113. In the present embodiment, it is assumed that the ACS adjustment can be adjusted by seven (7) different increments. The setting state display region 111 includes seven rectangular images arranged in a horizontal row. Each of the rectangular images represents one increment out of seven increments for the ACS adjustment.

In these depicted seven rectangular images, the color of one rectangular image is different from the colors of the other six rectangular images. Accordingly, the user can easily visually recognize at which increment, out of the 7 increment, the ACS adjustment value has been set. The setting is such that, as rectangular images closer to the right of setting state display region 111 are selected, individual image data is more readily determined to be a color document. Selection of a rectangular image closer to the left of setting state display region 111 are selected, individual image data is less readily determined to be a color document.

Furthermore, among the depicted seven rectangular images of this example, the rectangular image positioned at the center in the left-right direction is longer than the others in the vertical direction. The setting of the ACS adjustment value to correspond to the center rectangular image (also referred to as the middle or fourth rectangular image) of the seven rectangular images is referred to as the "standard setting". Accordingly, the user can easily visually recognize whether or not the current setting for the ACS adjustment is the standard setting state. In addition, the user can easily visually recognize whether the current setting of the ACS adjustment is results in color documents being more readily or less readily determined a color document compared to the standard setting.

The user can perform the ACS adjustment by tapping the region where the setting button image 112 is displayed or the region where the setting button image 113 is displayed, on the touch panel. Each time the setting button image 112 is tapped, the ACS adjustment shifts one increment to the left. Each time the setting button image 113 is tapped, the ACS adjustment shifts one increment to the right. FIG. 9A illustrates a state where the ACS adjustment is at the standard setting. FIG. 9B illustrates a state where the ACS adjustment has been shifted by two increments to the right (that is, more likely to identify a document as a color document as compared to the standard setting).

In the embodiment, a configuration in which the ACS setting screen is displayed on a touch panel is described, but the present disclosure is not limited thereto. For example, a configuration in which the control panel 120 is provided with seven light emitting units, corresponding to the seven rectangular images described above, and two physical buttons, corresponding to the setting button image 112 and the setting button image 113, may be provided.

For example, a different ACS threshold value can be assigned to each of seven separate increments (ACS adjustment levels), but the present disclosure is not limited to seven increments and, in general, any number of increments can be adopted. As described above, the ACS threshold value relates to the number of pixels having a saturation greater than a set saturation threshold value from among the total number of pixels included in individual image data. In the setting state display region 111, as the selected ACS adjustment increment corresponding to the rectangular image moves to the right, the ACS threshold value becomes smaller (fewer saturated pixels are required). Accordingly, it is more readily deemed that the individual image data corresponds to a color document. As the selected rectangular image moves to the left, the ACS threshold value becomes greater (more saturated pixels are required). Accordingly, individual image data is more readily deemed to not to be a color document.

In the embodiment, the color determination unit 1014 is configured to make a color determination based on the number of pixels having a saturation greater than the saturation threshold value from among all the pixels that form the individual image data. It is possible to make the adjustment such that, by performing the color determination based on the number of pixels, if, for example, a size of the color image region is about the size of just one document stamp or the collective size of a few document stamps, the document can still be treated as not a color document. Accordingly, even when a color region is included in a document, the image encoding for the grayscale image or the binary image can still be performed on such a document, and thus the encoding amount can be reduced.

However, the color determination is not limited to the above-described configuration. For example, the color determination unit 1014 may make the color determination based on the ratio of the number of pixels having the saturation greater than the saturation threshold value to the total number of pixels of the individual image data. In this case, a value indicating a ratio (e.g., a percentage of total pixels that are saturated pixels) can be set as the ACS threshold value rather than a number of pixels.

Further, for example, the color determination unit 1014 may make the color determination using the RGB values instead of saturation values.

The color image encoding unit 1015 performs the image encoding on individual image data that has been determined to be a color document by the color determination unit 1014. The color image encoding unit 1015 performs predetermined image encoding for color image data. In general, any method can be used as the image encoding method performed by the color image encoding unit 1015. For example, the color image encoding unit 1015 may perform image encoding of a Joint Photographic Experts Group (JPEG) type, which is an international standard for still image encoding.

The non-color image encoding unit 1016 performs image conversion from RGB data to grayscale image data for the individual image data that has been determined not to correspond to a color document by the color determination unit 1014. In general, any method can be used as the image conversion method performed by the non-color image encoding unit 1016. For example, the non-color image encoding unit 1016 may convert the RGB data into grayscale image data by calculating the average value of each color signal of the RGB data. Otherwise, for example, the non-color image encoding unit 1016 may convert the RGB data into grayscale image data by adding the signals after weighting to each signal of the RGB data.

As illustrated in FIG. 4, the non-color image encoding unit 1016 includes both a binary image encoding unit 1017 and a multi-value image encoding unit 1018.

The binary image encoding unit 1017 performs binary image encoding on individual image data that has been converted into the grayscale image data. In general, any method can be used as the binary image encoding method performed by the binary image encoding unit 1017. For example, the binary image encoding unit 1017 binarizes individual image data (which has already been converted to grayscale image data, for example), based on a predetermined binarization threshold value. The binary image encoding unit 1017 may perform binary image encoding on binarized individual image data using, for example, a run-length method that is a reversible compression method.

The multi-value image encoding unit 1018 performs multi-value image encoding on individual image data that has already been converted into grayscale image data. In general, any method can be used as the multi-value image encoding method performed by the multi-value image encoding unit 1018. For example, the multi-value image encoding unit 1018 may perform JPEG type image encoding on grayscale-converted individual image data, in a manner similar to the color image encoding unit 1015.

The non-color image encoding unit 1016 determines whether to perform binary image encoding or multi-value image encoding on individual image data determined not to correspond to a color document according to preset conditions. For example, the image encoding method can be designated in advance by the user.

FIG. 10 is a view illustrating an example of a setting screen displayed on a touch panel in which the display 110 and the control panel 120 are integrated. The setting screen illustrated in FIG. 10 is referred to as "encoding method setting screen" and can be used for selecting an encoding method to be performed on the individual image data that has been determined not to correspond to a color document.

As illustrated in FIG. 10, the encoding method setting screen includes a setting image region 114. The setting image region 114 includes a setting button image 115 and a setting button image 116. In the setting button image 115, text "Store As Binary Image" is displayed. In addition, in the setting button image 116, text "Save As Grayscale Image" is displayed.

When the user taps the setting button image 115, the control panel 120 generates an operation signal indicating that binary image encoding is to be performed on individual image data determined not to correspond to a color document. The control panel 120 outputs the generated operation signal to the non-color image encoding unit 1016 of the control unit 101. When the user taps the setting button image 116, the control panel 120 generates an operation signal indicating that multi-value image encoding is to be performed on individual image data determined not to correspond to a color document. The control panel 120 outputs the generated operation signal to the non-color image encoding unit 1016 of the control unit 101.

In addition to, or instead of, user selections, the non-color image encoding unit 1016 automatically determines whether to perform binary image encoding or multi-value image encoding on individual image data determined not to correspond to a color document. For example, the non-color image encoding unit 1016 can generate a histogram of pixel values for pixels that form individual image data that has been converted into grayscale image data. The non-color image encoding unit 1016 then automatically determines whether to perform binary image encoding or multi-value image encoding based on the shape of the generated histogram.

For example, in a case of a histogram having a shape in which the number of pixels is relatively low in the area near the center of the histogram, the read document is likely to be a monochrome binary document corresponding to a black and white line drawing or a text document. Therefore, in such a case, the non-color image encoding unit 1016 performs binary image encoding on individual image data. If the histogram has a shape in which the number of pixels in the area near the center of the histogram is not low, then the read document is likely to be a grayscale document such as a black and white photograph. Therefore, in such a case, the non-color image encoding unit 1016 performs multi-value image encoding on individual image data.

If the non-color image encoding unit 1016 is configured to automatically select between binary image encoding or multi-value image encoding, the user can adjust the selection decision criteria similarly to the above-described ACS adjustment process.

FIG. 11 is a view illustrating an example of a setting screen displayed on the touch panel in which the display 110 and the control panel 120 are integrated. FIG. 11 illustrates an example of a setting screen for a user to adjust the values associated with identifications of monochrome binary documents and grayscale documents. As illustrated in FIG. 11, the setting screen includes a setting state display region 117, a setting button image 118, and a setting button image 119. The configurations of the setting state display region 117, the setting button image 118, and the setting button image 119 are similar to the configurations of the setting state display region 111, the setting button image 112, and the setting button image 119 illustrated in FIG. 9. The user can tap the region where the setting button image 118 is displayed and the region where the setting button image 119 is displayed to change whether a document is more likely to be treated as monochrome binary image or a grayscale image.

The filing unit 1019 creates at least one file for individual image data from the entire image data. For example, the filing unit 1019 individually creates files for each individual image data encoded by the color image encoding unit 1015, the binary image encoding unit 1017, and the multi-value image encoding unit 1018. The filing unit 1019 may alternatively create a collective file (one file) for all of the individual image data encoded by the color image encoding unit 1015 and a collective file (one file) for all of the individual image data encoded by the binary image encoding unit 1017 and the multi-value image encoding unit. Alternatively, the filing unit 1019 creates one file for all of the individual image data encoded by the color image encoding unit 1015, one file for all of the individual image data encoded by the binary image encoding unit 1017, and one file for all of the individual image data encoded by the multi-value image encoding unit 1018. Alternatively, the filing unit 1019 creates a single file including all of the individual image data encoded by the color image encoding unit 1015, the binary image encoding unit 1017, and the multi-value image encoding unit 1018.

The method of filing the individual image data can be designated in advance by the user, for example.

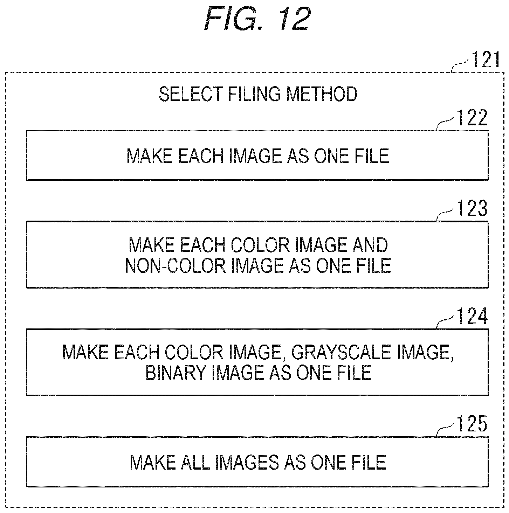

FIG. 12 is a view illustrating an example of a setting screen displayed on the touch panel in which the display 110 and the control panel 120 are integrated. The setting screen illustrated in FIG. 12 is a filing method setting screen for selecting a method of filing the individual image data.

As illustrated in FIG. 12, the filing method setting screen includes a setting image region 121. The setting image region 121 includes a setting button image 122, a setting button image 123, a setting button image 124, and a setting button image 125. In the setting button image 122, text "make each image as one file" is displayed. Further, in the setting button image 123, text "make each color image and non-color image as one file" is displayed. Further, in the setting button image 124, text "make each color image, grayscale image, and binary image as one file" is displayed. Further, in the setting button image 125, text "make all images as one file" is displayed.

When the setting button image 122 is tapped by the user, an operation signal indicating individual files for each of the isolated individual image data are to be generated. The control panel 120 outputs the generated operation signal to the filing unit 1019 of the control unit 101. When the user taps the setting button image 123, the control panel 120 generates an operation signal indicating a collective file for all of the color image data is to be created and a collective file for all of the non-color image data is to be created. The control panel 120 outputs the generated operation signal to the filing unit 1019 of the control unit 101. When the user taps the setting button image 124, the control panel 120 generates an operation signal indicating three collective files, one for each of the color image data, the binary encoded non-color image data, and the multi-value encoded non-color image data, are to be created. The control panel 120 outputs the generated operation signal to the filing unit 1019 of the control unit 101. When the setting button image 125 is tapped by the user, the control panel 120 generates an operation signal indicating all of the individual image data is to be saved together as one. The control panel 120 outputs the generated operation signal to the filing unit 1019 of the control unit 101.

In addition, the filing unit 1019 may individually file each isolated individual image data, and then allocate each of the files to a plurality of folders. For example, the filing unit 1019 may collectively allocate files for individual image data encoded by the color image encoding unit 1015 to one folder, and collectively allocate files for the individual image data encoded by the binary image encoding unit 1017 and the multi-value image encoding unit 1018 to another folder. Likewise, the created files may be allocated to various folders, either by data or image type, or any other criteria.

The filing unit 1019 stores files in a storage medium, such as the auxiliary storage device 103. The filing unit 1019 may output files to, for example, an external storage medium. In addition, the filing unit 1019 may output files to the printer unit 130 instead of electronically recording in the storage medium. In this case, the printer unit 130 forms an image on a sheet based on the data acquired from the filing unit 1019.

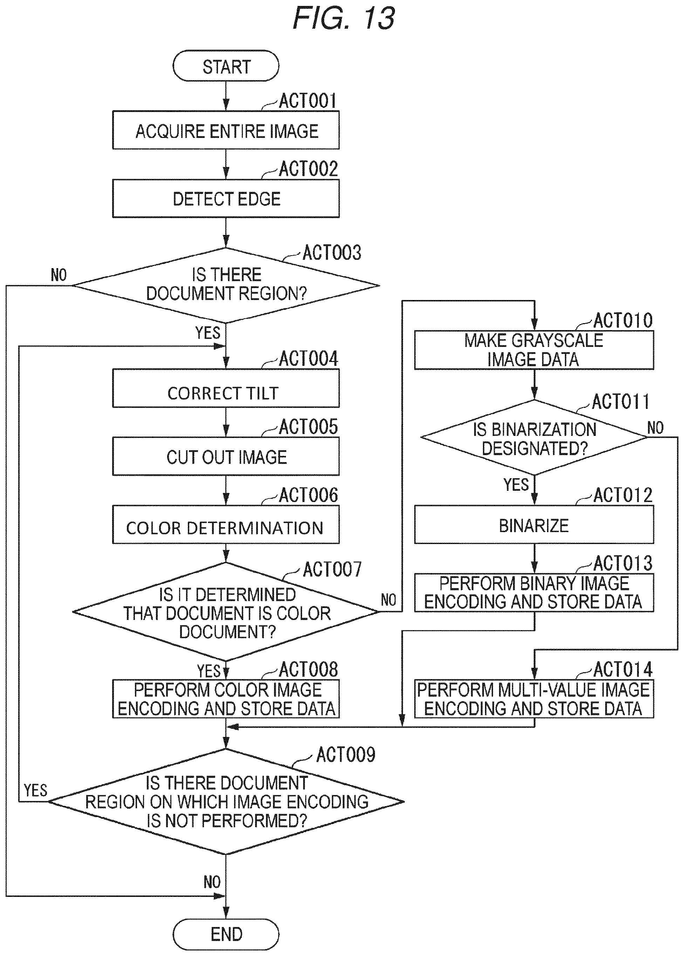

Next, the operation of the control unit 101 of the image forming apparatus 100 according to the embodiment will be described with reference to FIG. 13. FIG. 13 is a flowchart illustrating an example of the operation of the control unit 101.

The document region detection unit 1011 of the control unit 101 acquires the entire image data generated by the image reading unit 200 from the auxiliary storage device 103 (ACT 001). The document region detection unit 1011 performs detection of edges (ACT 002) for each image region (hereinafter, referred to as "document region") included in the acquired entire image data. Each document region corresponds to a document that was placed on the document table glass 201. When the document region detection unit 1011 determines there is no document region (ACT 003, No), the operation of the control unit 101 illustrated in the flowchart in FIG. 13 ends.

When the document region detection unit 1011 determines that there is a document region (ACT 003, Yes), the edge information indicating the detected document region is output to the tilt correction unit 1012 of the control unit 101. The tilt correction unit 1012 identifies a tilt or angle to the image regions based on the direction of an edge indicated by the acquired edge information. The tilt correction unit 1012 corrects the identified tilt/angle (ACT 004). The tilt correction unit 1012 outputs the image data for each document region, including those for which the tilt of the image region has been corrected, to the image cutting-out unit 1013 of the control unit 101.

The image cutting-out unit 1013 isolates the image regions included in the entire image data acquired from the tilt correction unit 1012 (ACT005). The image cutting-out unit 1013 generates individual image data corresponding to an isolated image region. The image cutting-out unit 1013 outputs the generated individual image data to the color determination unit 1014 of the control unit 101.

The color determination unit 1014 makes a color determination on the individual image data acquired from the image cutting-out unit 1013 (ACT 006). When it is determined by the color determination unit 1014 that the document corresponding to the individual image data is a color document (ACT 007, Yes), the color image encoding unit 1015 of the control unit 101 performs color image encoding on individual image data and stores the encoded data (ACT 008).

To store the encoded data, the color image encoding unit 1015 outputs the encoded individual image data to the filing unit 1019 of the control unit 101. The filing unit 1019 stores the individual image data acquired from the color image encoding unit 1015 in the auxiliary storage device 103 or the like.

When it is determined by the color determination unit 1014 that the document corresponding to the individual image data is not a color document (ACT 007, No), the non-color image encoding unit 1016 of the control unit 101 performs conversion of the individual image data from RGB data to grayscale image data (ACT 010).

When the binary image encoding is selected for the individual image data (ACT 011, Yes), the binary image encoding unit 1017 of the control unit 101 binarizes the grayscale individual image data based on a predetermined binarization threshold value (ACT 012). The binary image encoding unit 1017 performs binary image encoding on the binarized individual image data and stores the encoded data (ACT 013). To store the binarized individual image data, the binary image encoding unit 1017 outputs the encoded individual image data to the filing unit 1019. The filing unit 1019 stores the individual image data acquired from the binary image encoding unit 1017 in the auxiliary storage device 103 or the like.

When the multi-value image encoding is selected for the individual image data (ACT 011, No), the multi-value image encoding unit 1018 of the control unit 101 performs multi-value image encoding on the grayscale individual image data and stores the encoded data (ACT 014). To store the encoded data, the multi-value image encoding unit 1018 outputs the encoded individual image data to the filing unit 1019. The filing unit 1019 stores the individual image data acquired from the multi-value image encoding unit 1018 in the auxiliary storage device 103 or the like.

If there is a document region on which image encoding is not yet been performed (ACT 009, Yes), the control unit 101 repeats the operations from ACT 004 onward. Once the image encoding has been performed on all the detected document regions (ACT 009, No), the operation of the control unit 101 illustrated in the flowchart of FIG. 13 ends.

As described above, the image reading apparatus includes the reading unit and the control unit. The image forming apparatus 100 is an example of an image reading apparatus. The image reading unit 200 is an example of a reading unit. The control unit 101 is an example of a controller. The reading unit reads a plurality of documents placed on the document table at once as a color image. The document table glass 201 is an example of a document table. The sheet S is an example of a document. The control unit isolates images for each document from the entire image data acquired by reading the plurality of document with the reading unit. The control unit then determines, for each of the isolated images, whether or not the corresponding document is a color document. The control unit encodes each image by an image encoding method which may differ, image to image, depending on the determination result. The control unit records the encoded images in the storage unit. The auxiliary storage device 103 is an example of a storage unit.

With such a configuration, the image reading apparatus is capable of appropriately and independently encoding each image corresponding to one of the plurality of small-sized documents arranged on the document table. The image reading apparatus can perform color image encoding on an image determined to be a color document. Further, the image reading apparatus can perform image encoding by appropriately selecting binary image encoding or multi-value image encoding for an image determined not to be a color document. For example, the image reading apparatus can perform binary image encoding on a monochrome binary document, such as a line drawing or a text document, and further reduce the encoding amount. The image reading apparatus can perform multi-value image encoding on grayscale documents such as black and white photographs.

Certain functions of the image forming apparatus 100 may be realized by a computer or a computer system. **In** such a case, the functions may be realized via a stored software program or the like in a non-transitory, computer-readable recording medium, being read and executed. Note that a "computer system" as used herein may include an operating system (OS) and/or additional hardware such as a peripheral device. A program for realizing certain functions may operate in conjunction with other programs or software of the computer system. A "computer-readable recording medium" refers to a portable medium such as a flexible disk, a magneto-optical disk, a ROM, and a CD-ROM, and a storage apparatus such as a hard disk that might be embedded in a computer system. A program stored on a "computer-readable recording medium" may be transmitted via a network such as the Internet or a communication line such as a telephone line, and may also include a cloud-based storage medium and/or server or computer.

## Claims

1. An image reading apparatus (100), comprising:
a reading unit (200) configured to read a plurality of documents on a document table (20) and generate an overall scan image as color image data including images of all the documents in the plurality of documents; and
a controller (101) configured to:
detect edges of image regions for each of the documents in the overall scan image, and
correct a tilt of each of the image regions and separate each of the image regions from each other to isolate an individual image of each document from the overall scan image,
**characterized in that** the controller is configured to:
perform a color determination on each of the isolated images to determine if a document corresponding to each of the isolated images is a color document or a non-color document,
convert an isolated image to gray-scale image data when a document corresponding to the isolated image is determined to be a non-color document,
generate a histogram of pixel values for pixels that form the isolated image which has been converted into the grayscale image data, and
encode each of the isolated images with an image encoding method selected based on the color determination for each of the isolated images, wherein the isolated image which has been converted into the grayscale image data is encoded with a binary image encoding or a multi-value image encoding selected based on a shape of the generated histogram.

2. The image reading apparatus according to claim 1, wherein the controller is further configured to store each encoded image in a storage unit.

3. An image forming apparatus, comprising:
the image reading apparatus according to any one of claims 1 to 2; and
a printer unit (130) configured to form images on a recording medium.

4. The image forming apparatus according to claim 3, wherein the printer unit is configured to form images on the recording medium based on encoded images.

5. The image forming apparatus according to claim 4, wherein the controller is further configured to send each encoded image to the printer unit.

6. An image reading method, comprising:
reading a plurality of documents on a document table (20) and generating an overall scan image as color image data including images of all the documents in the plurality of documents;
detecting edges of image regions for each of the documents in the overall scan image, and
correcting a tilt of each of the image regions and separate each of the image regions from each other to isolate an individual image of each document from the overall scan image;
**characterized in that** the method comprises:
performing a color determination on each of the isolated images to determine if a document corresponding to each of the isolated images is a color document or a non-color document; and
converting an isolated image to gray-scale image data when a document corresponding to the isolated image is determined to be a non-color document,
generating a histogram of pixel values for pixels that form the isolated image which has been converted into the grayscale image data, and
encoding each of the isolated images with an image encoding method selected based on the color determination for each of the isolated images, wherein the isolated image which has been converted into the grayscale image data is encoded with a binary image encoding or a multi-value image encoding selected based on a shape of the generated histogram.

7. The image reading method according to claim 6, further comprising:
storing each encoded image in a storage unit.

## Patentansprüche

1. Bildlesevorrichtung (100), umfassend:
eine Leseeinheit (200), die konfiguriert ist, um eine Vielzahl von Dokumenten auf einem Dokumententisch (20) liest und ein Gesamtabtastbild als Farbbilddaten zu erzeugen, die Bilder aller Dokumente in der Vielzahl von Dokumenten beinhalten; und
eine Steuerung (101), die zu Folgendem konfiguriert ist:
Erkennen von Rändern von Bildbereichen für jedes der Dokumente in dem Gesamtabtastbild, und
Korrigieren einer Neigung von jedem der Bildbereiche und Trennen von jedem der Bildbereiche voneinander, um ein Einzelbild von jedem Dokument aus dem Gesamtabtastbild zu isolieren,
**dadurch gekennzeichnet, dass** die Steuerung zu Folgendem konfiguriert ist:
Durchführen einer Farbbestimmung an jedem der isolierten Bilder, um zu bestimmen, ob ein Dokument, das jedem der isolierten Bilder entspricht, ein Farbdokument oder ein Nicht-Farbdokument ist,
Umwandeln eines isolierten Bilds in Graustufenbilddaten, wenn ein Dokument, das dem isolierten Bild entspricht, als Nicht-Farbdokument bestimmt wird,
Erzeugen eines Histogramms von Pixelwerten für Pixel, die das isolierte Bild bilden, das in die Graustufenbilddaten umgewandelt worden ist, und
Kodieren jedes der isolierten Bilder mit einem Bildkodierungsverfahren, das basierend auf der Farbbestimmung für jedes der isolierten Bilder ausgewählt wird, wobei das isolierte Bild, das in die Graustufenbilddaten umgewandelt wurde, mit einer binären Bildkodierung oder einer mehrwertigen Bildkodierung kodiert wird, die basierend auf einer Form des erzeugten Histogramms ausgewählt wird.

2. Bildlesevorrichtung nach Anspruch 1, wobei die Steuereinheit ferner konfiguriert ist, um jedes kodierte Bild in einer Speichereinheit zu speichern.

3. Bilderzeugungsvorrichtung, umfassend:
die Bildlesevorrichtung nach einem der Ansprüche 1 bis 2; und
eine Druckeinheit (130), die konfiguriert ist, um Bilder auf einem Aufzeichnungsmedium zu erzeugen.

4. Bilderzeugungsvorrichtung nach Anspruch 3, wobei die Druckeinheit konfiguriert ist, um basierend auf kodierten Bildern Bilder auf dem Aufzeichnungsmedium zu erzeugen.

5. Bilderzeugungsvorrichtung nach Anspruch 4, wobei die Steuerung ferner konfiguriert ist, um jedes kodierte Bild an die Druckeinheit zu senden.

6. Bildleseverfahren, umfassend:
Lesen einer Vielzahl von Dokumenten auf einem Dokumententisch (20) und Erzeugen eines Gesamtabtastbilds als Farbbilddaten, die Bilder aller Dokumente der Vielzahl von Dokumenten beinhalten;
Erkennen von Rändern von Bildbereichen für jedes der Dokumente in dem Gesamtabtastbild, und
Korrigieren einer Neigung von jedem der Bildbereiche und Trennen von jedem der Bildbereiche voneinander, um ein Einzelbild von jedem Dokument aus dem Gesamtabtastbild zu isolieren;
**dadurch gekennzeichnet, dass** das Verfahren Folgendes umfasst:
Durchführen einer Farbbestimmung an jedem der isolierten Bilder, um zu bestimmen, ob ein Dokument, das jedem der isolierten Bilder entspricht, ein Farbdokument oder ein Nicht-Farbdokument ist; und
Umwandeln eines isolierten Bilds in Graustufenbilddaten, wenn ein Dokument, das dem isolierten Bild entspricht, als Nicht-Farbdokument bestimmt wird,
Erzeugen eines Histogramms von Pixelwerten für Pixel, die das isolierte Bild bilden, das in die Graustufenbilddaten umgewandelt wurde, und
Kodieren jedes der isolierten Bilder mit einem Bildkodierungsverfahren, das basierend auf der Farbbestimmung für jedes der isolierten Bilder ausgewählt wird, wobei das isolierte Bild, das in die Graustufenbilddaten umgewandelt wurde, mit einer binären Bildkodierung oder einer mehrwertigen Bildkodierung kodiert wird, die basierend auf einer Form des erzeugten Histogramms ausgewählt wird.

7. Bildleseverfahren nach Anspruch 6, ferner umfassend: Speichern von jedem kodierten Bild in einer Speichereinheit.

## Revendications

1. Appareil de lecture d'images (100), comprenant :
une unité de lecture (200) configurée de manière à lire une pluralité de documents sur une table de documents (20) et à générer une image de balayage globale sous la forme de données d'image couleur incluant des images de tous les documents de la pluralité de documents ; et
un contrôleur (101) configuré de manière à :
détecter des bords de régions d'image pour chacun des documents de l'image de balayage globale ; et
corriger une inclinaison de chacune des régions d'image et séparer chacune des régions d'image les unes des autres afin d'isoler une image individuelle de chaque document de l'image de balayage globale ;
**caractérisé en ce que** le contrôleur est configuré de manière à :
mettre en œuvre une détermination de couleur sur chacune des images isolées pour déterminer si un document correspondant à chacune des images isolées est un document couleur ou un document sans couleur ;
convertir une image isolée en données d'image à niveaux de gris lorsqu'un document correspondant à l'image isolée est déterminé comme étant un document sans couleur ;
générer un histogramme de valeurs de pixels pour des pixels qui forment l'image isolée qui a été convertie en données d'image à niveaux de gris ; et
coder chacune des images isolées à l'aide d'un procédé de codage d'image sélectionné sur la base de la détermination de couleur pour chacune des images isolées, dans laquelle l'image isolée qui a été convertie en données d'image à niveaux de gris est codée à l'aide d'un codage d'image binaire, ou d'un codage d'image à valeurs multiples sélectionné sur la base d'une forme de l'histogramme généré.

2. Appareil de lecture d'images selon la revendication 1, dans lequel le contrôleur est en outre configuré de manière à stocker chaque image codée dans une unité de stockage.

3. Appareil de formation d'images, comprenant :
l'appareil de lecture d'images selon l'une quelconque des revendications 1 à 2 ; et
une unité d'imprimante (130) configurée de manière à former des images sur un support d'enregistrement.

4. Appareil de formation d'images selon la revendication 3, dans lequel l'unité d'imprimante est configurée de manière à former des images sur le support d'enregistrement sur la base d'images codées.

5. Appareil de formation d'images selon la revendication 4, dans lequel le contrôleur est en outre configuré de manière à envoyer chaque image codée à l'unité d'imprimante.

6. Procédé de lecture d'images, comprenant le fait de :
lire une pluralité de documents sur une table de documents (20) et générer une image de balayage globale sous la forme de données d'image couleur incluant des images de tous les documents de la pluralité de documents ;
détecter des bords de régions d'image pour chacun des documents de l'image de balayage globale ; et
corriger une inclinaison de chacune des régions d'image et séparer chacune des régions d'image les unes des autres afin d'isoler une image individuelle de chaque document de l'image de balayage globale ;
**caractérisé en ce que** le procédé comprend le fait de :
mettre en œuvre une détermination de couleur sur chacune des images isolées pour déterminer si un document correspondant à chacune des images isolées est un document couleur ou un document sans couleur ;
convertir une image isolée en données d'image à niveaux de gris lorsqu'un document correspondant à l'image isolée est déterminé comme étant un document sans couleur ;
générer un histogramme de valeurs de pixels pour des pixels qui forment l'image isolée qui a été convertie en données d'image à niveaux de gris ; et
coder chacune des images isolées à l'aide d'un procédé de codage d'image sélectionné sur la base de la détermination de couleur pour chacune des images isolées, dans laquelle l'image isolée qui a été convertie en données d'image à niveaux de gris est codée à l'aide d'un codage d'image binaire, ou d'un codage d'image à valeurs multiples sélectionné sur la base d'une forme de l'histogramme généré.

7. Procédé de lecture d'images selon la revendication 6, comprenant en outre le fait de :
stocker chaque image codée dans une unité de stockage.
